# EUROPÄISCHE PATENTSCHRIFT

(11) **EP 0 679 148 B1**
(45) Veröffentlichungstag und Bekanntmachung des Hinweises auf die Patenterteilung: **20.09.2000**
(21) Anmeldenummer: 94905070.2
(22) Anmeldetag: 17.01.1994
(51) Int. Cl.: C05F 17/00, C05F 17/02

(54) **VERFAHREN ZUM MIKROBIOLOGISCHEN ABBAU VON ORGANISCHEN ABFÄLLEN**
MICROBIOLOGICAL METHOD FOR THE DECOMPOSITION OF ORGANIC WASTES
PROCEDE DE DECOMPOSITION MICROBIOLOGIQUE DE DECHETS ORGANIQUES

(30) Priorität: 18.01.1993 DE 4301116
(43) Veröffentlichungstag der Anmeldung: 02.11.1995
(73) Patentinhaber: VON LUDOWIG GmbH, D-23738 Johannishof/Lensahn (DE)
(72) Erfinder: Kneer, Franz Xaver, D-35713 Eschenburg-Eibelshausen (DE)
(74) Vertreter: Schulz, Rütger, Dr. Dipl.-Phys.
(86) Internationale Anmeldenummer: EP9400106
(87) Internationale Veröffentlichungsnummer: WO9415893

(56) Entgegenhaltungen:
- EP-A- 0 444 334
- EP-A- 0 496 271
- DE-A- 3 827 288
- DE-B- 1 592 729

## Beschreibung

Die Erfindung betrifft ein Verfahren zum mikrobiologischen Abbau von organischen Abfällen nach dem Oberbegriff des Anspruchs 1.

Aus der DE-AS 15 92 729 ist ein Verfahren bekannt, bei dem Abfälle in einem geschlossenen Behälter bei aeroben Bedingungen einem Rotteprozeß unterzogen werden, wobei diskontinuierlich und stoßweise Luft durch das Abfallmaterial geleitet und die Dauer der zwischen den Belüftungsperioden liegenden Ruhezeiten so gesteuert wird, daß die Temperaturen im Rottematerial unterhalb von 75° gehalten werden.

Dieses diskontinuierliche Verfahren wurde, obwohl es sehr gute Rotteergebnisse zeigt, durch Verfahren abgelöst, bei denen das Rottegut kontinuierlich belüftet wird. Ein solches Verfahren zum Kompostieren von organischen Abfällen und Klärschlamm, bei dem permanent Luft durch das zu kompostierende Material durchgeblasen wird, ist beispielsweise aus der EP-A1 0 496 271 bekannt. Bei dem Verfahren dieser Druckschrift wird die Durchflußmenge der den Reaktionsbehälter durchströmenden Belüftungsluft derart gesteuert, daß sie zu jedem Betriebszeitpunkt der für einen optimalen Kompostierungsprozeß erforderlichen Luftmenge möglichst genau entspricht.

Die kontinuierlichen Belüftungsverfahren haben jedoch den Nachteil, daß die eingeblasene Luft sich den Weg des geringsten Widerstandes durch das Abfall-Haufwerk sucht, so daß die Belüftung des Abfalls in dem Haufwerk nicht gleichmäßig erfolgt und sich Verdichtungszonen bilden, in denen ggf. der Sauerstoffgehalt so weit absinkt, daß die Bedingungen für einen aeroben Rotteprozeß nicht mehr gegeben sind und anaerobe Prozesse einsetzen können. Weiterhin haben die mit kontinuierlicher Luftzuführung arbeitenden Verfahren den Nachteil, daß die Temperaturverteilung innerhalb des rottenden Abfallmaterials ungleichmäßig ist, weil die zugeführte Frischluft die unteren Schichten abkühlt, die Temperatur also in den oberen Schichten höher ist. Desgleichen wird bei kontinuierlicher Belüftung die Feuchtigkeit aus den unteren Schichten nach oben geführt, so daß die unteren Schichten leicht austrocknen, und der Rotteprozeß dort abgebrochen wird. Die kontinuierlich arbeitenden Verfahren haben damit insgesamt den Nachteil, daß der Rotteprozeß in den verschiedenen Bereichen des Abfallhaufwerkes ungleichmäßig verläuft. Soll das gesamte Abfallmaterial einen bestimmten Rottegrad erreichen, so muß das Abfall-Haufwerk länger in dem Rottebehälter belassen werden, als es bei einem überall gleichmäßigen Rotteprozeß notwendig wäre.

Auf der anderen Seite hat das diskontinuierlich arbeitende Blaubeuer'sche Belüftungsverfahren den Nachteil, daß die Belüftung nach der Temperatur des Rottematerials gesteuert wird, so daß die Rottebedingungen nicht optimal eingestellt werden können.

Ein weiteres Verfahren zum mikrobiologischen Abbau von organischen Abfällen mit einer diskontinuierlichen Belüftung ist aus der DE-A1 38 27 288 bekannt. Bei dem in dieser Druckschrift beschriebenen Verfahren wird in den verschiedenen Schichten des Abfall-Haufwerks mittels Meßsonden der Sauerstoffgehalt erfaßt und zur Regelung der Dauern der Belüftungspausen benutzt.

Aufgabe der Erfindung ist daher, die aus dem Stand der Technik bekannten, mit diskontinuierlicher Belüftung arbeitenden Verfahren so weiterzubilden, daß eine effektivere Steuerung des Rotteprozesses möglich ist.

Diese Aufgabe wird erfindungsgemäß mit einem Verfahren nach dem Patentanspruch 1 gelöst.

Erfindungsgemäß wird der Sauerstoffgehalt der Abluft, d. h. in der Luft, die sich am Gasauslaß bzw. in dem Raum oberhalb des Rottegutes befindet, gemessen. Weiter wird die Dauer der zwischen den Belüftungsperioden liegenden Ruhezeiten nicht anhand von Mittelwerten des Sauerstoffgehaltes im Rottegut, sondern über das Minimum des Sauerstoffgehaltes in der Abluft geregelt.

Vorteilhafte Ausgestaltungen der Erfindung ergeben sich aus den Unteransprüchen. Die Erfindung wird nun in Zusammenhang mit den Figuren beschrieben und näher erläutert.

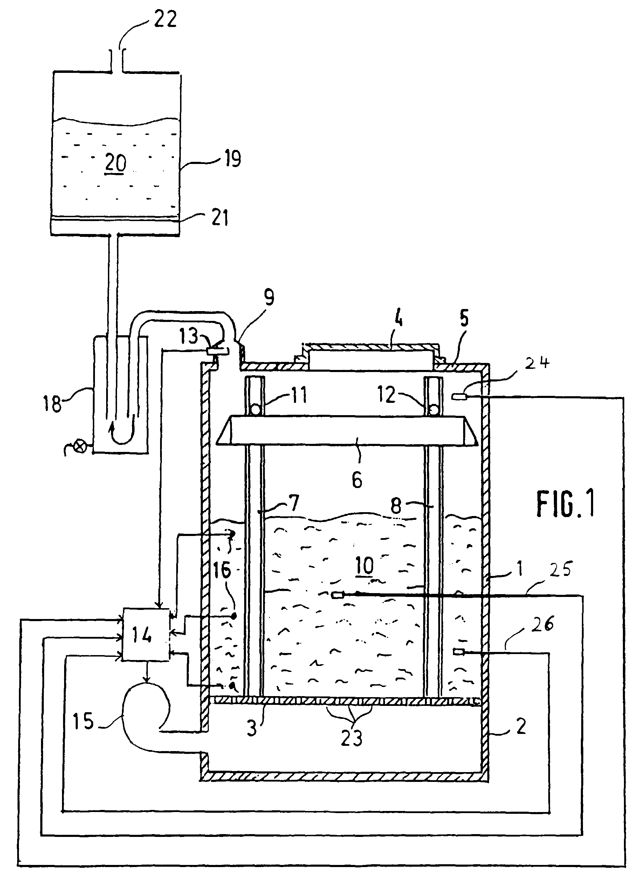

In der Fig. 1 ist schematisch die für das Rotten verwendete Anordnung dargestellt. Sie besteht aus einem Behälter 1, der mit einem geeigneten Belüftungsboden, z. B. einem Lochboden oder Gitterrost 3 versehen ist. Vorzugsweise besteht der Belüftungsboden aus in Längsrichtung nebeneinander mit kleinem Abstand angeordneten Lang- oder Winkelprofilen oder auch Rundstäben. Bei einem Lochboden oder einem Gitterrost kann das Rottematerial sich in den Löchern verfangen und sie verstopfen, so daß jedes Loch einzeln aufgestoßen werden muß. Bei dem mit Langprofilen oder -stäben aufgebauten Belüftungsboden besteht dagegen immer die Möglichkeit, mit einem angepaßten Schieber das Rottematerial am Ende des Rotteprozesses von dem Belüftungsboden in Längsrichtung der Profile abzuschieben, wobei gleichzeitig Material, das sich in den Spalten zwischen den Langprofilen verfangen hat, ausgekratzt wird.

Das Abfallmaterial wird auf diesen Belüftungsboden 10 durch den geöffneten Deckel 4 aufgehäuft. Zum gleichmäßigen Verteilen des Abfallmaterials in dem Behälter 1 kann eine Räumschar 6 im Inneren des Behälters 1 angeordnet sein. Diese Räumschar 6 ist an zwei Schienen 7, 8 in senkrechter Richtung verfahrbar. Das Anheben der Räumschar 6 geschieht mit Hilfe von Hubspindeln 11, 12. Unterhalb des Lochbodens 3 befindet sich ein Belüftungskasten 2, in den mit Hilfe eines Gebläses 15 Luft eingedrückt werden kann. Die eingedrückte Luft strömt dann durch die Löcher des Lochbodens in das Abfallmaterial 10. In dem Abluftkanal 9, der sich an der Oberseite des Behälters 1 befindet, ist ein Sensor 13 angeordnet, mit dem die Sauerstoff-Konzentration in der Abluft bestimmt werden kann. Es kann auch ein zweiter Sensor vorgesehen sein, mit dem beispielsweise der CO₂-Gehalt bestimmt wird. Innerhalb des Behälters 1 sind Temperaturmeßfühler 16 vorgesehen, mit denen die Temperatur des Abfallmaterials in verschiedenen Höhen vom Lochboden gemessen wird.

Das Ausgangssignal des Sauerstoff-Sensors 13 und die Signale der Temperaturmeßfühler 16 werden einer Steuerung 14 zugeführt, die entsprechend dem Meßwert des Sauerstoffgehaltes und ggf. auch entsprechend dem Meßwert der Temperatur die zwischen den Belüftungsperioden liegenden Ruhezeiten steuert. Die Steuerung 14 wirkt unmittelbar auf das Gebläse 15 und schaltet es ein bzw. aus.

Die Abluft durchströmt einen Wasserabscheider 18 und gelangt dann in einen Biofilter 19. Der Biofilter 19 weist ebenfalls einen Lochboden 21 auf, auf dem biologisch aktives Material 20 aufgeschüttet ist. Die Abluft durchströmt dieses Material 20, bevor sie am Austritt 22 in die Atmosphäre gelangt.

Das erfindungsgemäße Verfahren läuft wie folgt ab:

Nach dem Einfüllen des Abfallmaterials, das ggf. mit einem Impfsubstrat, beispielsweise einem fertig gerotteten organischen Material versetzt worden ist, wird der Behälter geschlossen und der Rotteprozeß begonnen. Nachdem der Rotteprozeß eingesetzt hat, was durch die Messung der Temperatur innerhalb des Abfallhaufens festgestellt werden kann, wird mit Hilfe des Gebläses Luft eingedrückt, so daß das Rottematerial von unten her belüftet wird. Diese Belüftung ist stoßweise; es wird innerhalb einer Zeitspanne von etwa 1 bis 5 Minuten eine Luftmenge eingedrückt, die etwa dem Behältervolumen entspricht. Simultan mit dem Eindrücken der Luft oder einige Sekunden später wird die oberhalb des Abfall-Haufens befindliche Abluft mit einem Gebläse abgesaugt. Während der Dauer der Luftzufuhr wird der Sauerstoffgehalt in der abgezogenen Abluft überwacht. Beim Rotteprozeß besteht nur ein geringer Gasaustausch zwischen dem sich in dem Abfallmaterial bildenden Reaktionsgas wie z.B. CO₂ und dem Raum oberhalb des Abfallmaterials. Aus diesem Grunde wird während der Belüftungsperioden in der Abluft zunächst ein relativ hoher Sauerstoffgehalt von beispielsweise 20% gemessen. Wenn die stoßweise zugeführte Luft den Abfallhaufen durchlaufen und dort die organischen Reaktionsgase mitgeführt hat, sinkt der Sauerstoffgehalt in der Abluft auf einen Wert, der zwischen 16 und 19% betragen kann. Wenn die gasförmigen Abbauprodukte ausgespült sind, steigt der Sauerstoffgehalt wieder an, bis der Sauerstoffgehalt der Frischluft erreicht ist. Je mehr Sauerstoff in den Belüftungspausen von dem mikrobiologischen Abbauprozeß in dem Abfallhaufen verbraucht worden ist, desto niedriger wird der während der Belüftungsperiode festgestellte Sauerstoffgehalt der Abluft. Der niedrigste, während der Belüftungsperiode festgestellte Sauerstoffgehalt in der Abluft ist damit ein Maß für die Aktivität des Rotteprozesses und kann daher für die Steuerung des Rotteprozesses eingesetzt werden. Der Sollwert für den Sauerstoffgehalt in der Abluft liegt bei 17 - 18%. Wenn der Sauerstoffgehalt unter diesen Wert absinkt, wird die Pausenzeit zwischen den Belüftungsperioden verkürzt. Wenn beispielsweise die Belüftung für jeweils 3 Minuten mit einem Abstand von 20 Minuten durchgeführt worden ist und nach einer gewissen Zeit sich der Rotteprozeß in dem Abfallmaterial so beschleunigt, daß mehr Sauerstoff verbraucht wird und infolgedessen der in der Abluft gemessene Sauerstoffgehalt unter den Wert von 17% absinkt, so wird die Belüftung nicht mehr alle 20 Minuten, sondern beispielsweise alle 10 Minuten oder, falls der Sauerstoffgehalt sich der unteren Grenze von 16% nähert, alle 5 Minuten durchgeführt. Umgekehrt wird dann, wenn der Sauerstoffgehalt in der Abluft weniger stark abfällt, die Zeitspanne zwischen den einzelnen Belüftungsperioden verlängert. Mit fortschreitendem Abbau des organischen Materials wird der Sauerstoffverbrauch der Mikroorganismen immer geringer, so daß die Pausen zwischen den Belüftungszeiträumen immer länger werden. Wenn sie in die Nähe von einer Stunde gelangen, so zeigt das an, daß der Rotteprozeß abgeschlossen ist und der Prozeß kann dann abgebrochen, das gerottete Material ausgebracht und durch neues Abfallmaterial ersetzt werden.

Bei einer alternativen Ausführungsform des erfindungsgemäßen Verfahrens wird der Sauerstoffgehalt in dem Raum zwischen dem aufgehäuftem Abfallmaterial und der Behälterwand mit einem Sensor 24 gemessen. Zwischen diesem Luftpolster und dem im Inneren des Abfallhaufens befindlichen Gasvolumen findet aufgrund von Konvektion und Diffusion ein gewisser Gasaustausch statt, so daß ein Teil des in diesem Luftpolster befindlichen Sauerstoffs in das Haufwerk eindringt und dort von dem Rotteprozeß verbraucht wird.

Infolgedessen sinkt in den Ruhezeiten zwischen den Belüftungsperioden der Sauerstoffgehalt in dem Raum zwischen dem Abfallhaufen und der Behälterwand. Je aktiver das Stadium des Rotteprozesses ist, desto schneller sinkt der O₂-Gehalt, und desto öfter muß die Luftzufuhr erfolgen.

Schließlich kann auch der Sauerstoffgehalt des Gases gemessen werden, das sich im Inneren des Abfallhaufens befindet. Da die Abbauprozesse im Abfallmaterial lokal stark variieren können, müssen mehrere Sonden (25, 26) an unterschiedlichen Stellen des Abfallhaufens angebracht und aus deren Daten Mittelwerte gebildet werden.

## Patentansprüche

1. Verfahren zum mikrobiologischen Abbau von organischen Abfällen, die in einem geschlossenen Behälter unter Luftzufuhr bei aeroben Bedingungen einem Rotteprozeß unterzogen werden, wobei Luft diskontinuierlich und stoßweise von unten durch das Abfallmaterial geleitet und die mit den gasförmigen Abbauprodukten durchmischte Luft abgeführt wird, **dadurch gekennzeichnet, daß**
gleichzeitig mit der Luftzufuhr oder eine kurze Zeit danach die Abluft aus dem Raum über dem Abfallmaterial abgesaugt wird, und
daß die Dauer der zwischen den Belüftungsperioden liegenden Ruhezeiten nach Maßgabe des niedrigsten Wertes des O₂-Gehaltes in der Abluft so gesteuert wird, daß der O₂-Gehalt in der Abluft nicht unter 16 Vol% sinkt.

2. Verfahren nach Anspruch 1,
**dadurch gekennzeichnet,**
daß während der Ruhezeiten der zeitliche Verlauf des Sauerstoffgehaltes in dem Raum zwischen dem Haufen von Abfallmaterial und der Behälterwand gemessen wird.

3. Verfahren nach Anspruch 1 oder 2,
**dadurch gekennzeichnet,**
daß die Dauer der Belüftungsperioden zwischen einer und fünf Minuten liegt.

4. Verfahren nach einem der Ansprüche 1 bis 3,
**dadurch gekennzeichnet,**
daß die innerhalb einer Belüftungsperiode zugeführte Luftmenge etwa dem Volumen des Behälters entspricht.

5. Verfahren nach einem der Ansprüche 1 bis 4
**dadurch gekennzeichnet,**
daß die Temperatur in dem rottenden Abfallmaterial unterhalb von 75° C gehalten wird.

6. Verfahren nach einem der Ansprüche 1 bis 5,
**dadurch gekennzeichnet,**
daß die abgeführte oder abgesaugte Luft durch ein aktives Filter geleitet wird.

7. Behälter zur Verwendung bei einem Verfahren nach einem der Ansprüche 1 bis 6, der mit einem Belüftungsboden (3) versehen ist,
**dadurch gekennzeichnet,**
daß der Belüftungsboden (3) aus nebeneinander mit geringem Abstand angeordneten Langprofilen oder Stäben besteht, und durch den von unten mittels eines Gebläses (15) Luft in den Behälter (1) einleitbar ist, und der Behälter (1) einen Abluftkanal (9) aufweist, in dem ein Sensor (13) zur Bestimmung des Sauerstoffgehaltes in der Abluft vorgesehen ist.

## Claims

1. A process for microbiological degradation of organic waste, which is subjected to a rotting process in a closed container under aerobic conditions with air feed, wherein air is conveyed through the waste material discontinuously and intermittently from below and the air is drawn off in a mixture with the gaseous degradation products,
characterised in that,
at the same time as the air feed or a short time thereafter, the exhaust air is extracted from the space above the waste material, and in that
the duration of the rest periods between the aeration periods is controlled in such a way, as a function of the lowest value of the O₂ content in the exhaust air, that the O₂ content in the exhaust air does not fall below 16 vol.%.

2. A process according to claim 1,
characterised in that,
the variation over time of the oxygen content in the space between the pile of waste material and the container wall is measured during the rest periods.

3. A process according to claim 1 or claim 2,
characterised in that
the duration of the aeration periods is between one and five minutes.

4. A process according to one of claims 1 to 3,
characterised in that
the quantity of air supplied within an aeration period corresponds approximately to the volume of the container.

5. A process according to one of claims 1 to 4,
characterised in that
the temperature in the rotting waste material is kept below 75°C.

6. A process according to one of claims 1 to 5,
characterised in that
the drawn-off or extracted air is conveyed through an active filter.

7. A container for use when performing a process according to one of claims 1 to 6, which is provided with an aeration base (3),
characterised in that
the aeration base (3) consists of elongate profiles or bars arranged adjacent to one another with slight spacing, air being introduced therethrough from below into the container (1) by means of a fan (15), and the container (1) comprises an exhaust air duct (9) in which a sensor (13) is provided for determining the oxygen content in the exhaust air.

## Revendications

1. Procédé de dégradation microbiologique de déchets organiques, qui sont soumis à un processus de pourrissement dans des conditions aérobies dans un récipient fermé avec apport d'air, où de l'air est amené par en bas au travers des matières constituant les déchets de manière discontinue et par saccades et l'air mélangé avec les produits de décomposition gazeux est évacué.
caractérisé
en ce que l'air usé est aspiré hors de l'espace situé au dessus des matières constituant les déchets pendant ou peu de temps après l'apport d'air, et
en ce que la durée des temps de repos existant entre les périodes d'aération est commandée en fonction de la plus faible valeur de la teneur en O₂ de l'air usé de manière que la teneur en O₂ de l'air usé ne baisse pas en dessous de 16 vol%.

2. Procédé selon la revendication 1, caractérisé en ce que l'évolution temporelle de la teneur en oxygène de l'espace situé entre l'amas de matières constituant les déchets et la paroi du récipient est mesurée pendant les temps de repos.

3. Procédé selon la revendication 1 ou 2 caractérisé en ce que la durée des périodes d'aération est située entre une et cinq minutes.

4. Procédé selon l'une des revendications 1 à 3 caractérisé en ce que la quantité d'air apportée pendant une période d'aération correspond sensiblement au volume du récipient.

5. Procédé selon l'une des revendications 1 à 4 caractérisé en ce que la température dans les matières constituant les déchets qui pourrissent est maintenue en dessous de 75°C.

6. Procédé selon l'une des revendications 1 à 5 caractérisé en ce que l'air évacué ou aspiré est amené à traverser un filtre actif.

7. Récipient destiné à être utilisé dans un procédé selon l'une des revendications 1 à 6, qui est muni d'un plancher d'aération (3), caractérisé en ce que le plancher d'aération (3) consiste en profilés longs ou barres disposés côte à côte à peu de distance, et au travers duquel de l'air peut être introduit par en bas dans le récipient (1) au moyen d'une soufflerie (15), et le récipient (1) comporte un canal à air usé (9) dans lequel est prévu un capteur (13) pour la détermination de la teneur en oxygène de l'air usé.
